# FASCICULE DE BREVET EUROPEEN

(11) **EP 1 411 320 B1**
(45) Date de publication et mention de la délivrance du brevet: **18.07.2018**
(21) Numéro de dépôt: 03292495.3
(22) Date de dépôt: 09.10.2003
(51) Int. Cl.: G01B 11/16, G01M 11/08

(54) **Procédé et système pour l'évaluation des contraintes dans un élément allongé, notamment une conduite**
Verfahren und System zur Schätzung von Beanspruchungen in einem länglichen Element, nähmlich in einer Leitung
Method and system for evaluating strains in an elongated element like a conduit

(30) Priorité: 10.10.2002 FR 0212589
(43) Date de publication de la demande: 21.04.2004
(73) Titulaire: EMC3, 83130 La Garde (FR)
(72) Inventeur: Vigne, Christian, 83320 Carqueiranne (FR); Goujon, Hervé, 83136 Gareoult (FR)
(74) Mandataire: Nony

(56) Documents cités:
- EP-A- 0 461 018
- FR-A- 2 465 995
- JP-A- H10 300 413
- JP-A- H11 101 617
- US-A- 2 150 070
- US-A- 3 460 378
- US-A- 3 693 075
- US-A- 4 468 619
- US-A- 4 769 598
- US-A- 4 962 669
- US-A- 5 362 962
- US-A- 5 734 108
- US-B1- 6 243 657
- PATENT ABSTRACTS OF JAPAN vol. 013, no. 054 (P-824), 8 février 1989 (1989-02-08) & JP 63 246607 A (SUMITOMO METAL IND LTD), 13 octobre 1988 (1988-10-13)

## Description

La présente invention a pour objet un procédé pour évaluer des contraintes dans un élément allongé, notamment une conduite tubulaire, et un système permettant de mettre en oeuvre ce procédé.

L'invention est notamment destinée au domaine de l'exploitation pétrolière en milieu sous-marin.

Ce type d'exploitation met en oeuvre des éléments allongés tels que des conduites, des ombilicaux et des câbles, reliant un support de surface, notamment une plate-forme ou un navire, et le fond de la nappe d'eau ou un autre support de surface, lesquels éléments sont soumis à des contraintes générées par le mouvement de ces éléments sous l'effet notamment de la houle, des vagues, des courants marins et des déplacements du ou des supports de surface. De manière classique, le comportement en fatigue de ces éléments allongés peut être modélisé lors d'une phase préliminaire d'étude.

Dans le cas d'une conduite dont une portion repose sur le fond, une région critique en termes de fatigue se situe au voisinage du « point de touche », c'est-à-dire du point où la conduite vient en contact avec le fond. Le point de touche n'est pas fixe et peut se déplacer sur de grandes distances, jusqu'à plusieurs centaines de mètres dans le cas d'une exploitation en grande profondeur.

Il est connu de la demande JP 11-101617 une méthode d'évaluation de la déformation d'une conduite utilisant la mesure de la lumière transmise passant à travers au moins deux capteurs à fibre optique. Une table de calibration établie au préalable fournit la relation entre la lumière perdue par chaque capteur et la quantité de déformation de la conduite.

La demande JP 10-300413 décrit l'utilisation d'un tuyau flexible inséré dans une conduite enterrée pour mesurer la déformation de cette dernière, par l'utilisation de jauges de déformation placées régulièrement le long du tuyau.

Il existe un besoin pour pouvoir évaluer de manière fiable les contraintes et l'état de fatigue dans un élément allongé, en particulier dans une portion de celui-ci au voisinage du point de touche, le cas échéant, afin notamment de confirmer la durée de vie prévue pour la conduite, et de prévoir, en cas de besoin, des opérations de maintenance sur la conduite et prévenir d'éventuels accidents.

Il existe également un besoin pour pouvoir valider de manière satisfaisante, voire améliorer, les modèles théoriques utilisés lors de la phase préliminaire d'étude.

L'invention a pour objet un procédé pour évaluer des contraintes dans un élément allongé, notamment une conduite, selon la revendication 1.

Selon la présente invention, un point de mesure repère la position axiale sur l'élément allongé où la ou les mesures sont effectuées, indépendamment du fait que cette ou ces mesures soient réalisées à distance ou sur l'axe de l'élément allongé lui-même.

Le paramètre caractéristique précité peut être le rayon de courbure, la position du centre de courbure ou la déformation en sens axial, sur son axe, de l'élément allongé.

L'invention permet, à partir de plusieurs mesures ponctuelles, de reconstituer la géométrie d'une portion de l'élément allongé. Ainsi, à partir d'un nombre de mesures qui peut être faible, il est possible de connaître des caractéristiques associées à l'élément allongé en de nombreux points et de déterminer la position d'un point critique prédéterminé tel qu'un point de touche.

Afin de déterminer le paramètre caractéristique, notamment l'un au moins du rayon de courbure, de la position du centre de courbure et de la déformation dans le sens axial, sur son axe, de l'élément allongé en d'autres points que les points de mesure, par exemple là où des mesures directes ne seraient pas réalisables, il est possible de procéder par extrapolation, notamment en modélisant sous forme d'une équation la géométrie d'une portion prédéterminée de l'élément allongé, et en effectuant la résolution numérique de cette équation grâce aux valeurs mesurées aux points de mesure.

Les mesures et les calculs numériques sont avantageusement réalisés de manière concomitante et répétée afin de pouvoir suivre en temps réel la déformation d'une portion prédéterminée de l'élément allongé.

Dans un exemple de mise en oeuvre de l'invention, on détermine, à partir des contraintes dans l'élément allongé l'état de fatigue dans l'élément allongé. On peut ainsi connaître les contraintes et l'état de fatigue de l'élément allongé non seulement aux points de mesure mais également en des points éloignés des points de mesure, par exemple au voisinage d'un point de touche.

On peut par exemple mesurer, pour chaque point de mesure, une déformation en sens axial de l'élément allongé en trois emplacements situés autour de l'axe de l'élément, de manière à pouvoir déduire de ces trois valeurs de déformation mesurées le rayon de courbure, la position du centre de courbure et la déformation en sens axial, sur l'axe, en ce point de mesure.

Dans un exemple de mise en oeuvre de l'invention, on effectue des mesures de la grandeur physique en au moins trois points de mesure axialement espacés sur l'élément allongé.

Dans un exemple de mise en oeuvre de l'invention, l'élément allongé est destiné à être immergé et peut être sous la forme d'une conduite, d'un ombilical ou d'un câble, ou d'un ensemble de ceux-ci.

Une déformation en sens axial de l'élément allongé peut être mesurée au moyen d'un capteur optique comportant notamment deux fibres optiques dont l'une est solidaire, en deux points, de l'élément allongé, étant tendue entre ces deux points afin de suivre localement des déformations en sens axial de celui-ci, et l'autre fibre servant de fibre de référence, étant détendue entre les deux points. Le capteur peut être fixé sur l'élément allongé, à distance de l'axe de celui-ci.

Les points de mesure peuvent se situer à proximité du point de touche, le cas échéant, mais sont suffisamment éloignés de celui-ci, de sorte que, suite à un mouvement éventuel du point de touche, le ou les capteurs fixés sur l'élément allongé ne viennent pas en contact avec le fond. Les points de mesure peuvent être tous d'un côté de l'élément allongé par rapport au point de touche.

L'invention a également pour objet un système d'évaluation des contraintes dans un élément allongé, notamment une conduite tubulaire, selon la revendication 7.

L'un au moins des capteurs peut être un capteur optique comportant notamment deux fibres optiques dont l'une est tendue et solidaire, en deux points, de l'élément allongé, et l'autre fibre servant de fibre de référence.

Le système peut comporter un interféromètre agencé pour déterminer le déphasage entre deux signaux lumineux issus respectivement des deux fibres.

L'un au moins des modules peut comporter trois capteurs disposés notamment à 120° les uns des autres autour de l'élément allongé.

Du fait de l'utilisation de fibres optiques, le ou les modules peuvent être dépourvus de composants électroniques et/ou de moyens de mémorisation des données.

L'invention sera mieux comprise à la lecture de la description détaillée qui va suivre, d'un exemple de mise en oeuvre non limitatif de celle-ci, en se référant au dessin annexé, sur lequel :
- la figure 1 illustre schématiquement et partiellement la mise en oeuvre d'un système conforme à l'invention,
- la figure 2 représente schématiquement et partiellement les différents éléments du système de la figure 1, les capteurs étant fixés sur une conduite tubulaire, et,
- la figure 3 est une coupe schématique et partielle suivant III-III de la conduite de la figure 2.

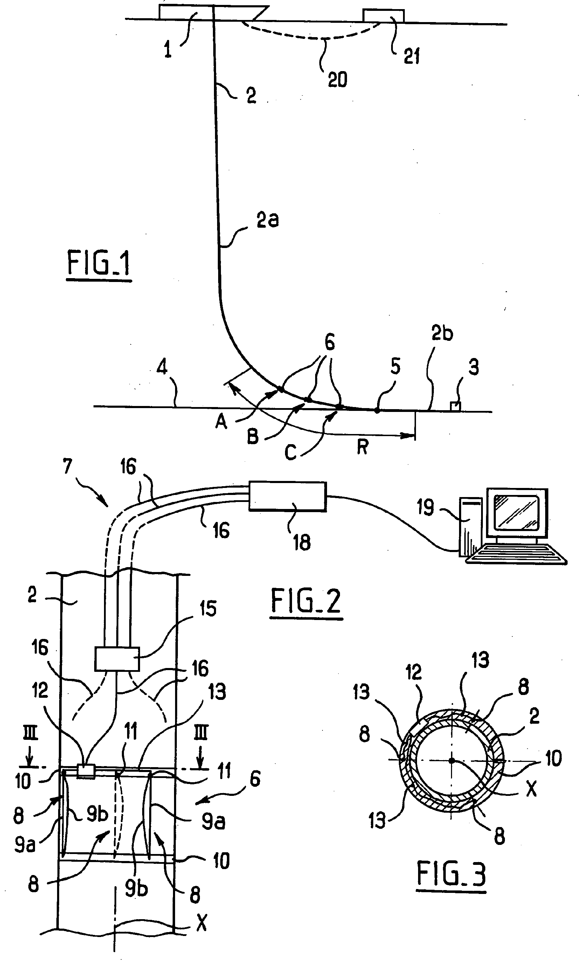

On a représenté sur la figure 1 un support de surface 1 tel qu'un navire ou une plate-forme pétrolière qui peut être fixe ou flottante, sur lequel se raccorde un élément allongé 2 tel qu'une conduite tubulaire présentant un axe X et reliée à un puits de pétrole 3 situé sur le fond 4 de la nappe d'eau. Dans l'exemple décrit, la conduite 2 est rigide et réalisée en acier.

La conduite 2 présente une longueur telle qu'elle puisse être utilisée à des profondeurs supérieures à environ mille mètres.

La conduite 2 présente un point de touche 5 définissant deux portions 2a et 2b, à savoir une portion dynamique 2a située entre le point de touche 5 et le support 1 et une portion statique 2b située entre le point de touche 5 et le puits 3.

La portion dynamique 2a est soumise à des mouvements continus sous l'effet de la houle, des vagues, des courants marins et des déplacements du support 1, lesquels mouvements génèrent au sein de la conduite 2 des contraintes de fatigue.

Trois modules de mesure 6 d'un système 7 conforme à l'invention sont fixés sur la conduite 2, à proximité du point de touche 5, en trois points A, B et C axialement espacés et choisis de manière à ce que, lors des déplacements du point de touche 5, les modules de mesure 6 ne viennent pas en contact avec le fond 4.

Les modules 6 peuvent être agencés de manière à permettre leur fixation sur la conduite 2 à l'aide d'un robot de type R.O.V.

Chaque module de mesure 6 comporte trois capteurs optiques 8 disposés équiangulairement autour de la conduite 2, à distance de l'axe X, comme on peut le voir sur la figure 3.

Chaque capteur optique 8 comprend deux fibres optiques 9a et 9b, chacune étant fixée à ses extrémités respectives à un cerclage 10 mis en place autour de la conduite 2.

Les deux cerclages 10 et les capteurs 8 peuvent être solidaires et constituer un ensemble autonome.

Bien entendu, les fibres optiques peuvent être fixées sur la conduite de toute autre manière appropriée.

La fibre 9a est tendue entre les deux cerclages 10 de sorte que, consécutivement à une déformation en sens axial de la conduite 2 entre les cerclages 10, la longueur de la fibre tendue 9a puisse varier en réponse.

L'autre fibre 9b est fixée aux cerclages 10 de manière détendue et sert de fibre de référence.

Comme illustré sur la figure 2, les fibres 9a et 9b d'un capteur 8 se raccordent à une extrémité à un coupleur individuel 11. Les trois coupleurs individuels 11 d'un module 6 sont reliés à un coupleur commun 12 par des fibres optiques 13.

Les coupleurs communs 12 des trois modules de mesure 6 se raccordent à un boîtier de jonction 15 par trois fibres optiques 16 respectives.

Ces fibres optiques 16 sont connectées à un interféromètre 18 en place sur le support de surface 1 et relié à une unité de traitement des données 19.

L'interféromètre 18 est agencé de manière à pouvoir émettre un signal lumineux dans chacune des fibres optiques 16 et déterminer le déphasage entre les deux signaux lumineux réfléchis qui se sont propagés respectivement dans les fibres 9a et 9b d'un capteur optique 8.

A partir du déphasage, il est possible de déterminer l'élongation de la fibre 9a et donc la déformation en sens axial de la conduite 2 à cet endroit.

L'unité de traitement 19 est agencée de manière à pouvoir :
- à partir des données de déphasage envoyées par l'interféromètre 18, déterminer pour chaque capteur 8 la déformation en sens axial d'une région périphérique de la conduite 2,
- à partir de ces données relatives à une déformation en sens axial, déterminer le rayon de courbure, la position du centre de courbure et la déformation en sens axial, sur l'axe X, de la conduite aux points A, B et C respectivement,
- à partir des données sur le rayon de courbure, la position du centre de courbure et la déformation en sens axial, sur l'axe X, aux points A, B et C, procéder à la résolution numérique d'une équation modélisant la forme d'une portion R prédéterminée de la conduite 2, laquelle portion R contient le point de touche 5 et les points A, B et C, et
- déterminer le rayon de courbure, la position du centre de courbure et la déformation en sens axial, sur l'axe X, de la conduite 2 en des points de la portion R autres que les points A, B et C.

Dans l'exemple décrit, l'équation précitée est l'équation d'une chaînette.

L'unité de traitement 19 est également agencée de manière à permettre de déterminer les contraintes et l'état de fatigue en un point de la portion R à partir du rayon de courbure, de la position du centre de courbure et de la déformation en sens axial, sur l'axe X, en ce point.

Ainsi, le système 7 permet de reconstituer la forme de la portion R de la conduite 2 et de connaître l'état de fatigue dans cette portion R et notamment au voisinage du point de touche 5.

Des mesures simultanées répétées aux points A, B et C et un traitement instantané des données mesurées permettent de suivre en temps réel la déformation de la portion R et de connaître l'état de fatigue dans cette portion R.

Bien entendu, l'invention n'est pas limitée à l'exemple de mise en oeuvre qui vient d'être décrit.

On peut notamment fixer sur la conduite 2 un nombre de modules de mesure 6 supérieur à trois, par exemple quatre.

Le système selon l'invention peut également être utilisé en liaison avec un élément allongé autre qu'une conduite tubulaire raccordée à un puits 3.

On a par exemple représenté sur la figure 1, en pointillés, un élément allongé constitué par une ligne d'export 20 reliant le support de surface 1 à une bouée 21 contre laquelle peut venir s'amarrer un navire pétrolier.

## Revendications

1. Procédé pour évaluer des contraintes dans un élément allongé, notamment une conduite (2), **caractérisé par le fait qu'**il comporte les étapes consistant à :
- mesurer une ou plusieurs grandeurs physiques prédéterminées associées à une ou plusieurs régions de l'élément allongé notamment radialement éloignées de l'axe de celui-ci, en au moins deux points de mesure (A, B, C) axialement espacés sur l'élément allongé, et de manière simultanée, l'une au moins des grandeurs physiques mesurées correspondant à une déformation en sens axial associée à une région de l'élément allongé (2) radialement éloignée de l'axe (X) de celui-ci, pour au moins un point de mesure (A, B, C), au moins une grandeur physique étant mesurée en au moins deux emplacements, notamment trois emplacements, angulairement espacés autour de l'axe de l'élément allongé,
- déterminer à partir de cette ou ces grandeurs mesurées au moins un paramètre caractéristique de l'élément allongé auxdits au moins deux points de mesure,
- déterminer à partir dudit au moins un paramètre caractéristique auxdits au moins deux points de mesure, au moins un paramètre caractéristique de l'élément allongé pour des points autres que lesdits au moins deux points de mesure,
- déterminer, à partir dudit au moins un paramètre caractéristique, notamment du rayon de courbure, de la position du centre de courbure et de la déformation en sens axial, sur l'axe, en un point de l'élément allongé, les contraintes dans l'élément allongé en ce point.

2. Procédé selon la revendication 1, **caractérisé par le fait que** ledit au moins un paramètre caractéristique est sélectionné parmi le rayon de courbure, la position du centre de courbure et la déformation en sens axial, sur son axe (X), de l'élément allongé.

3. Procédé selon la revendication 1, **caractérisé par le fait que** l'on détermine, à partir desdites contraintes, l'état de fatigue dans l'élément allongé en ce point.

4. Procédé selon l'une quelconque des revendications précédentes, **caractérisé par le fait que** l'élément allongé (2) est destiné à être immergé.

5. Procédé selon la revendication 4, l'élément allongé présentant un point de touche (5), **caractérisé par le fait que** les points de mesures (A, B, C) se situent à proximité du point de touche.

6. Procédé selon l'une quelconque des revendications 3 à 5, **caractérisé par le fait que** l'on mesure une déformation en sens axial de l'élément allongé (2) au moyen d'un capteur optique (8) comportant deux fibres optiques (9a, 9b) dont l'une (9a) est solidaire, en deux points, de l'élément allongé, étant tendue entre ces deux points afin de suivre localement des déformations axiales de l'élément allongé, et l'autre fibre (9b) servant de fibre de référence, étant détendue entre ces deux points.

7. Système (7) d'évaluation des contraintes dans un élément allongé, notamment une conduite, **caractérisé par le fait qu'**il comporte :
- au moins deux modules de mesure (6) destinés à être fixés sur l'élément allongé (2) respectivement en deux points axialement espacés (A, B, C), chaque module comportant plusieurs capteurs (8), de préférence au moins trois capteurs, situés à distance de l'axe (X) de l'élément allongé et agencés pour mesurer une grandeur physique associée à l'élément allongé, correspondant à une déformation en sens axial associée à une région de l'élément allongé (2) radialement éloignée de l'axe (X) de celui-ci, au moins une grandeur physique étant mesurée en au moins deux emplacements, notamment trois emplacements, angulairement espacés autour de l'axe de l'élément allongé,
- une unité de traitement des données (19) agencée pour recevoir des données relatives aux mesures effectuées par lesdits au moins deux modules, pour déterminer à partir desdites données au moins un paramètre caractéristique, notamment l'un au moins du rayon de courbure, de la position du centre de courbure et de la déformation en sens axial, sur l'axe, de l'élément allongé auxdits au moins deux points de mesure et en des points autres que lesdits au moins deux points de mesure (A, B, C), et pour déterminer, à partir dudit au moins un paramètre caractéristique, notamment du rayon de courbure, de la position du centre de courbure et de la déformation en sens axial, sur l'axe, en un point de l'élément allongé, les contraintes dans l'élément allongé en ce point.

8. Système selon la revendication 7, **caractérisé par le fait que** l'un au moins des capteurs est un capteur optique (8) comportant deux fibres optiques (9a, 9b) dont l'une (9a) est tendue et solidaire, en deux points, de l'élément allongé, et l'autre fibre (9b) servant de fibre de référence, et **par le fait que** le système (7) comporte un interféromètre (18) agencé pour déterminer le déphasage entre deux signaux lumineux issus respectivement des deux fibres.

9. Système selon l'une des revendications 7 et 8, **caractérisé par le fait que** le ou les modules (6) sont dépourvus de composants électroniques et/ou de moyens de mémorisation des données.

## Patentansprüche

1. Verfahren zur Schätzung von Beanspruchungen in einem länglichen Element, insbesondere einer Leitung (2), **dadurch gekennzeichnet, dass** es Schritte aufweist, die darin bestehen:
- eine oder mehrere vorbestimmte physikalische Größen, die einem oder mehreren Bereichen des länglichen Elements zugeordnet sind, die insbesondere radial von dessen Achse entfernt sind, an mindestens zwei Messpunkten (A, B, C), die axial auf dem länglichen Element voneinander beabstandet sind, und gleichzeitig mindestens eine der gemessenen physikalischen Größen, die einer axialen Verformung in axialer Richtung entspricht, die einem Bereich des länglichen Elements (2) zugeordnet ist, der radial von dessen Achse (X) entfernt ist, für mindestens einen Messpunkt (A, B, C) zu messen, wobei mindestens eine physikalische Größe an mindestens zwei Stellen, insbesondere drei Stellen, gemessen wird, die winkelmäßig um die Achse des länglichen Elements herum beabstandet sind,
- ausgehend von dieser oder diesen gemessenen Größen mindestens einen Parameter zu bestimmen, der für das längliche Element an den mindestens zwei Messpunkten charakteristisch ist,
- ausgehend von dem mindestens einen charakteristischen Parameter an den mindestens zwei Messpunkten mindestens einen Parameter zu bestimmen, der für das längliche Element für andere Punkte als die mindestens zwei Messpunkte charakteristisch ist,
- ausgehend von dem mindestens einen charakteristischen Parameter, insbesondere dem Krümmungsradius, der Position des Krümmungsmittelpunktes und der Verformung in axialer Richtung, auf der Achse an einem Punkt des länglichen Elements die Beanspruchungen in dem länglichen Element an diesem Punkt zu bestimmen.

2. Verfahren nach Anspruch 1, **dadurch gekennzeichnet, dass** der mindestens eine charakteristische Parameter ausgewählt wird aus dem Krümmungsradius, der Position des Krümmungsmittelpunktes und der Verformung in axialer Richtung des länglichen Elements auf seiner Achse (X).

3. Verfahren nach Anspruch 1, **dadurch gekennzeichnet, dass** ausgehend von diesen Beanspruchungen der Ermüdungszustand in dem länglichen Element an diesem Punkt bestimmt wird.

4. Verfahren nach einem der vorhergehenden Ansprüche, **dadurch gekennzeichnet, dass** das längliche Element (2) dazu bestimmt ist, eingetaucht zu werden.

5. Verfahren nach Anspruch 4, **dadurch gekennzeichnet, dass**, wobei das längliche Element einen Berührungspunkt (5) aufweist, die Messpunkte (A, B, C) in der Nähe des Berührungspunktes angeordnet sind.

6. Verfahren nach einem der Ansprüche 3 bis 5, **dadurch gekennzeichnet, dass** eine Verformung in axiale Richtung des länglichen Elements (2) mit Hilfe eines optischen Sensors (8) gemessen wird, der zwei optische Fasern (9a, 9b) aufweist, wovon die eine Faser (9a), die an zwei Punkten mit dem länglichen Element fest verbunden ist, zwischen diesen zwei Punkten gespannt wird, um lokal axialen Verformungen des länglichen Elements zu folgen, und die andere Faser (9b), die als Referenzfaser dient, zwischen diesen zwei Punkten entspannt wird.

7. System (7) zur Schätzung von Beanspruchungen in einem länglichen Element, insbesondere einer Leitung, **dadurch gekennzeichnet, dass** es aufweist:
- mindestens zwei Messmodule (6), die dazu bestimmt sind, auf dem länglichen Element (2) jeweils an zwei axial voneinander beabstandeten Messpunkten (A, B, C) befestigt zu werden, wobei jedes Modul mehrere Sensoren (8), vorzugsweise mindestens drei Sensoren, aufweist, die von der Achse (X) des länglichen Elements beabstandet angeordnet sind und ausgebildet sind, um eine physikalische Größe zu messen, die dem länglichen Element zugeordnet ist, die einer Verformung in axialer Richtung entspricht, die einem Bereich des länglichen Elements (2) zugeordnet ist, der radial von dessen Achse (X) entfernt ist, wobei mindestens eine physikalische Größe an mindestens zwei Stellen, insbesondere drei Stellen, gemessen wird, die winkelmäßig um die Achse des länglichen Elements herum beabstandet sind,
- eine Datenverarbeitungseinheit (19), die ausgebildet ist, um Daten in Bezug auf die Messungen zu empfangen, die von den mindestens zwei Modulen durchgeführt sind, um ausgehend von den Daten mindestens einen charakteristischen Parameter, insbesondere mindestens einen von dem Krümmungsradius, der Position des Krümmungsmittelpunktes und der Verformung in axialer Richtung, auf der Achse des länglichen Elements an den mindestens zwei Messpunkten und an anderen Punkten als den mindestens zwei Messpunkten (A, B, C) zu bestimmen, und um ausgehend von dem mindestens einen charakteristischen Parameter, insbesondere dem Krümmungsradius, der Position des Krümmungsmittelpunktes und der Verformung in axialer Richtung, auf der Achse an einem Punkt des länglichen Elements die Beanspruchungen in dem länglichen Element an diesem Punkt zu bestimmen.

8. System nach Anspruch 7, **dadurch gekennzeichnet, dass** mindestens einer der Sensoren ein optischer Sensor (8) ist, der zwei optische Fasern (9a, 9b) aufweist, wovon die eine Faser (9a) gespannt ist und an zwei Punkten mit dem länglichen Element fest verbunden ist, und die andere Faser (9b) als Referenzfaser dient, und dadurch, dass das System (7) ein Interferometer (18) aufweist, das ausgebildet ist, um die Phasenverschiebung zwischen zwei Lichtsignalen, die jeweils aus den zwei Fasern ausgetreten sind, zu bestimmen.

9. Verfahren nach einem der Ansprüche 7 und 8, **dadurch gekennzeichnet, dass** das oder die Module (6) keine elektronischen Komponenten und/oder Datenspeicherungsmittel aufweisen.

## Claims

1. Method for evaluating stresses in an elongate element, in particular a pipe (2), **characterized in that** it has the steps involving:
- measuring one or more predetermined physical quantities associated with one or more regions of the elongate element, in particular at a radial distance from the axis thereof, at at least two measurement points (A, B, C) axially spaced out on the elongate element, and simultaneously, at least one of the measured physical quantities corresponding to a deformation in an axial direction, which deformation is associated with a region of the elongate element (2) at a radial distance from the axis (X) thereof, for at least one measurement point (A, B, C), at least one physical quantity being measured at at least two locations, in particular three locations, angularly spaced out around the axis of the elongate element,
- determining, from this or these measured quantity or quantities, at least one characteristic parameter of the elongate element at said at least two measurement points,
- determining, from said at least one characteristic parameter at said at least two measurement points, at least one characteristic parameter of the elongate element for points other than said at least two measurement points,
- determining, from said at least one characteristic parameter, in particular from the radius of curvature, from the position of the centre of curvature and from the deformation in an axial direction, on the axis, at a point on the elongate element, the stresses in the elongate element at this point.

2. Method according to Claim 1, **characterized in that** said at least one characteristic parameter is selected from among the radius of curvature, the position of the centre of curvature and the deformation in an axial direction, on its axis (X), of the elongate element.

3. Method according to Claim 1, **characterized in that** said stresses are used to determine the fatigue condition in the elongate element at this point.

4. Method according to any one of the preceding claims, **characterized in that** the elongate element (2) is intended to be submerged.

5. Method according to Claim 4, the elongate element having a touch point (5), **characterized in that** the measurement points (A, B, C) are situated near to the touch point.

6. Method according to any one of Claims 3 to 5, **characterized in that** a deformation in an axial direction of the elongate element (2) is measured by means of an optical sensor (8) having two optical fibres (9a, 9b), one (9a) of which is integral, at two points, with the elongate element, being taut between these two points so as to locally follow axial deformations of the elongate element, and the other fibre (9b) serving as a reference fibre, being relaxed between these two points.

7. System (7) for evaluating stresses in an elongate element, in particular a pipe, **characterized in that** it has:
- at least two measuring modules (6) intended to be fixed to the elongate element (2) at each of two axially spaced points (A, B, C), each module having multiple sensors (8), preferably at least three sensors, situated at a distance from the axis (X) of the elongate element and designed to measure a physical quantity associated with the elongate element, corresponding to a deformation in an axial direction, which deformation is associated with a region of the elongate element (2) at a radial distance from the axis (X) thereof, at least one physical quantity being measured at at least two locations, in particular three locations, angularly spaced out around the axis of the elongate element,
- a data processing unit (19) designed to receive data relating to the measurements taken by said at least two modules, in order to determine, from said data, at least one characteristic parameter, in particular at least one from the radius of curvature, the position of the centre of curvature and the deformation in an axial direction, on the axis, of the elongate element at said at least two measurement points and at points other than said at least two measurement points (A, B, C), and in order to determine, from said at least one characteristic parameter, in particular from the radius of curvature, from the position of the centre of curvature and from the deformation in an axial direction, on the axis, at a point on the elongate element, the stresses in the elongate element at this point.

8. System according to Claim 7, **characterized in that** at least one of the sensors is an optical sensor (8) having two optical fibres (9a, 9b), one (9a) of which is taut and integral, at two points, with the elongate element, and the other fibre (9b) serving as a reference fibre, and **in that** the system (7) has an interferometer (18) designed to determine the phase shift between two light signals from each of the two fibres.

9. System according to either of Claims 7 and 8, **characterized in that** the module(s) (6) is/are devoid of electronic components and/or of data storage means.
